# EUROPEAN PATENT APPLICATION

(11) **EP 2 918 617 A1**
(43) Date of publication of application: **16.09.2015**
(21) Application number: 13853332.8
(22) Date of filing: 24.10.2013
(51) Int. Cl.: C08F 255/00, C08F 2/44, C08F 4/34, C08L 23/02, C08L 33/12, G06F 3/041

(54) **METHOD FOR PRODUCING (METH)ACRYLIC RESIN COMPOSITION, METHOD FOR PRODUCING (METH)ACRYLIC RESIN MOLDED BODY, (METH)ACRYLIC RESIN MOLDED BODY, FRONT SURFACE PLATE FOR LIQUID CRYSTAL DISPLAY DEVICE, AND TOUCH PANEL**

(30) Priority: 06.11.2012 JP 2012244091
(71) Applicant: Mitsubishi Rayon Co., Ltd., Tokyo 100-8253 (JP)
(72) Inventor: MOCHIDA, Kenji, Otake-shi Hiroshima 739-0693 (JP); TAMURA, Yukiko, Otake-shi Hiroshima 739-0693 (JP); ONO, Masahiko, Otake-shi Hiroshima 739-0693 (JP)
(74) Representative: TBK
(86) International application number: PCT/JP2013/078816
(87) International publication number: WO 2014/073385

(57) **Abstract**

Provided are: a (meth)acrylic resin molded body having superior transparency and shock resistance; a method for producing same; and a method for producing a (meth)acrylic resin composition that can provide the (meth)acrylic resin molded body. In the method for producing a (meth)acrylic resin composition containing a (meth)acrylic polymer (A), which has a methyl methacrylate unit, and an olefin-alkyl (meth)acrylate copolymer (B), a monomer starting material containing methyl methacrylate is polymerized in the presence of the olefin-alkyl (meth)acrylate copolymer (B) using a specific polymerization initiator, obtaining a (meth)acrylic polymer (A) having methyl methacrylate units. Further provided are: a (meth)acrylic resin molded body obtained from the (meth)acrylic resin composition; a front surface plate for a liquid crystal display device using the (meth)acrylic resin molded body; and a touch panel.

## Description

### Field of the Invention

The present invention relates to a method for producing a (meth)acrylic resin composition; a method for producing a (meth)acrylic resin shaped article; a (meth)acrylic resin shaped article; a front-surface plate for a liquid crystal display device; and a touch panel.

### Background Art

Acrylic resins are used as a front-surface plate for various types of displays such as TV sets and PC monitors, cell phones, tablet terminals, digital cameras, automobile navigation devices and the like because of their excellent transparency. Also, acrylic resins are widely used in industrial materials and construction materials. However, acrylic resins do not always demonstrate sufficient strength against impact.

To improve the impact resistance properties of acrylic resins, for example, patent publication 1 proposes a method for cast polymerizing a solution obtained by dissolving an ethylene-vinyl acetate copolymer in a methyl methacrylate.

### PRIOR ART PUBLICATION

### PATENT PUBLICATION

Patent publication 1: JP S43-2466A

### SUMMARY OF THE INVENTION

### PROBLEMS TO BE SOLVED BY THE INVENTION

However, low transparency is a problem observed in applications of the composition containing an ethylene-vinyl acetate copolymer described in patent publication 1.

The objective of the present invention is to provide the following: a (meth)acrylic resin shaped article with excellent transparency, impact resistance and durability and its production method; a method for producing a (meth)acrylic resin composition capable of forming the (meth)acrylic resin shaped article; and a front-surface plate of a liquid-crystal display device and a touch panel using the (meth)acrylic resin shaped article.

### SOLUTIONS TO THE PROBLEMS

The aforementioned problems are solved by the following embodiments [1]∼[15] of the present invention.
[1] A production method of a (meth)acrylic resin composition which is set to contain (meth)acrylic polymer (A) having a methyl methacrylate unit (hereinafter referred to as "(meth)acrylic polymer (A)") and an olefin-alkyl (meth)acrylate copolymer (B) (hereinafter referred to as "copolymer (B)"). In the method, (meth)acrylic polymer (A) is prepared by polymerizing a monomer material containing methyl methacrylate (hereinafter referred to as "the monomer material") in the presence of copolymer (B) using a polymerization initiator represented by formula (1) below (hereinafter referred to as "the initiator".)

   (CH₃)₃C-O-O-CO-R (1)

   (in formula (1), "R" is a hydrocarbon group having 1∼20 carbon atoms or an alkoxy group having 1∼20 carbon atoms)
[2] The production method of a (meth)acrylic resin composition described in [1], in which (meth)acrylic polymer (A) is obtained by block polymerizing the monomer material in the presence of copolymer (B) using the initiator.
[3] The production method of a (meth)acrylic resin composition described in [1] or [2], in which (meth)acrylic polymer (A) is set to contain a methyl methacrylate (a) unit; a (meth)acrylate (b) unit, which includes a hydrocarbon group having 1∼11 carbon atoms (hereinafter referred to as a "monomer (b)") but is not methyl methacrylate (a); a monomer (c) unit having at least two ethylenically unsaturated bonds in the molecule (hereinafter referred to as "monomer (c)"); and a vinyl monomer (d) unit which is not any of monomers (a)∼(c) (hereinafter referred to as "monomer (d)").
[4] A production method of a (meth)acrylic resin shaped article which is set to contain (meth)acrylic polymer (A) and copolymer (B): the method includes steps (1a), (2a) and 3 below. In such a method, polymerization is conducted in the presence of copolymer (B) in at least one of step (1a) or (2a), and polymerization is conducted using the initiator in at least one of step (1a) or (2a).

### [step 1a]

A step for obtaining a syrup by polymerizing at least part of the monomer material.

### [step 2a]

A step for obtaining a (meth)acrylic resin shaped article by pouring into a mold the syrup and, if necessary, the remaining the monomer material, and then conducting polymerization.

### [step 3]

A step for taking out a (meth)acrylic resin shaped article from the mold.
[5] A production method of a (meth)acrylic resin shaped article which is set to contain (meth)acrylic polymer (A) and copolymer (B): the method includes steps (1b), (2b) and 3 below.

### [step 1b]

A step for preparing a polymer mixture that contains the monomer material, copolymer (B) and the initiator.

### [step 2b]

A step for obtaining a (meth)acrylic resin shaped article by pouring the polymer mixture into a mold, and by polymerizing the mixture.

### [step 3]

A step for taking out a (meth)acrylic resin shaped article from the mold.
[6] The production method of a (meth)acrylic resin shaped article described in [4] or [5], in which (meth)acrylic polymer (A) is set to have a methyl methacrylate (a) unit, a monomer (b) unit, a monomer (c) unit and a monomer (d) unit.
[7] A (meth)acrylic resin shaped article is set as follows: a thickness is 2 mm or less; a 50% impact-failure height based on ISO 6603-1 is 100 mm or greater; and a change in haze values is 1% or less before and after thermal cycle testing under the conditions below.
   <thermal cycle testing method>
   - size of test piece: 10 mm×10 mm square
   - temperature inside chamber: 85±0.5°C in high-temperature chamber, -40±0.5°C in low-temperature chamber,
   - holding duration in chamber: 30 minutes in high-temperature chamber, 30 minutes in low-temperature chamber,
   - time spent for transferring between high-temperature chamber and low-temperature chamber: 10 seconds or less
   - number of test cycles: 72
[8] The (meth)acrylic resin shaped article described in [7], which contains (meth)acrylic polymer (A) set to have a methyl methacrylate (a) unit, a monomer (b) unit, a monomer (c) unit and a monomer (d) unit.
[9] A front-surface plate of a liquid-crystal display produced using the shaped article made of the (meth)acrylic resin composition obtained by the method described in [1] or [2].
[10] A touch panel produced using the shaped article made of the (meth)acrylic resin composition obtained by the method described in [1] or [2].
[11] A front-surface plate of a liquid-crystal display produced using the (meth)acrylic resin shaped article described in [7] or [8].
[12] A touch panel produced using the (meth)acrylic resin shaped article described in [7] or [8].

### EFFECTS OF THE INVENTION

According to the embodiments of the present invention, a (meth)acrylic resin shaped article is provided to exhibit excellent transparency, impact resistance and durability, and the front-surface plate of a liquid-crystal display and a touch panel are produced by using the (meth)acrylic resin shaped article.

### DETAILED DESCRIPTION OF THE EMBODIMENTS

The embodiments of the present invention are described below. A "(meth)acrylic resin" indicates at least one type selected from among "acrylic resins" and "(meth)acrylic resins." Also, a "(meth)acrylate" indicates at least one type selected from among "acrylates" and "methacrylates."

### [(Meth)acrylic Polymer (A)]

(Meth)acrylic polymer (A) is such a (meth)acrylic polymer that has a methyl methacrylate unit. It may be either a homopolymer having a methyl methacrylate unit or a copolymer having a methyl methacrylate unit and a vinyl monomer unit other than a methyl methacrylate. A (meth)acrylic polymer (A) is obtained by polymerizing the monomer material containing methyl methacrylate in the presence of later-described copolymer (B) using the later-described initiator.

Considering impact resistance, transparency, mechanical strength, weather resistance and moldability of the (meth)acrylic resin shaped article, (meth)acrylic polymer (A) is preferred to contain 50∼100 mass% of a methyl methacrylate (a) unit and 0∼50 mass% of a vinyl monomer unit other than a methyl methacrylate unit. In addition, from the viewpoints of suppressing deformation of the (meth)acrylic resin shaped article caused by moisture absorption, the vinyl monomer unit other than a methyl methacrylate unit is preferred to be at least one type selected from a monomer (b) unit, monomer (c) unit and monomer (d) unit. Especially, from the viewpoints of moisture absorbency and heat resistance of the (meth)acrylic resin shaped article, (meth)acrylic polymer (A) is preferred to have a monomer (a) unit, a monomer (b) unit, a monomer (c) unit and a monomer (d) unit.

### [Monomer (b) Unit]

The (meth)acrylate that forms a monomer (b) unit is a (meth)acrylate, which contains a hydrocarbon group having 1∼11 carbon atoms but is not methyl methacrylate. Examples of monomer (b) are, for example, methyl acrylate, ethyl (meth)acrylate, isopropyl (meth)acrylate, t-butyl (meth)acrylate, i-butyl (meth)acrylate, n-butyl (meth)acrylate, cyclohexyl (meth)acrylate, bornyl (meth)acrylate, norbornyl (meth)acrylate, isobornyl (meth)acrylate, adamantyl (meth)acrylate, methylcyclohexyl (meth)acrylate, norbornylmethyl (meth)acrylate, dicyclopentanyl (meth)acrylate, dicyclopentenyl (meth)acrylate, dicyclopentenyloxyethyl (meth)acrylate, cyclodecyl (meth)acrylate, 4-t-butyl cyclohexyl (meth)acrylate, and trimethyl cyclohexyl (meth)acrylate. Monomer (b) may be used alone or in combination of two or more.

### [Monomer (c) Unit]

The monomer that forms a monomer (c) unit has at least two ethylenically unsaturated bonds in the molecule. Examples of monomer (c) are, alkane diol di(meth)acrylates such as ethylene glycol di(meth)acrylate, 1,2-propylene glycol di(meth)acrylate, 1,3-butylene glycol di(meth)acrylate, 1,6-hexanediol di(meth)acrylate, and neopentyl glycol di(meth)acrylate; polyfunctional polymerizable compounds containing at least two ethylenically unsaturated bonds in the molecule, such as diethylene glycol di(meth)acrylate, dipropylene glycol di(meth)acrylate, triethylene glycol di(meth)acrylate, tetraethylene glycol di(meth)acrylate, and polyethylene glycol di(meth)acrylate; and unsaturated polyester prepolymers obtained from at least one type of polycarboxylic acid including unsaturated polycarboxylic acid and at least one type of diol. Among those, an alkane diol di(meth)acrylate is preferred as a monomer (c) from the viewpoint of heat tolerance of a (meth)acrylic resin sheet related to the present invention. Such a monomer (c) may be used alone or in combination of two or more.

### [Monomer (d) Unit]

The vinyl monomer that forms a monomer (d) unit is any monomer other than methyl methacrylate (a), monomer (b) or monomer (c). Examples of monomer (d) are, (meth)acrylates containing a hydrocarbon group having 12 or more carbon atoms; unsaturated carboxylic acids such as (meth)acrylic acid, maleic acid, and itaconic acid; unsaturated carboxylic anhydrides such as maleic anhydride and itaconic anhydride; maleimide derivatives such as N-phenyl maleimide and N-cyclohexyl maleimide; vinyl esters such as vinyl acetate and vinyl benzoate; halogenated vinyl monomers such as vinyl chloride, vinylidene chloride and their derivatives; nitrogen-containing vinyl monomers such as methacrylamide and acrylonitrile; epoxy group-containing vinyl monomers such as glycidyl (meth)acrylate; and aromatic vinyl monomers such as styrene and α-methyl styrene. Monomers (d) may be used alone or in combination of two or more.

### [Copolymer (B)]

Examples of olefin as a raw material for the olefin unit of copolymer (B) are, ethylene, propylene, isopropylene, and butadiene. Those may be used alone or in combination of two or more.

Examples of alkyl (meth)acrylate as the raw material for the alkyl (meth)acrylate unit of copolymer (B) are, methyl acrylate, ethyl (meth)acrylate, isopropyl (meth)acrylate, t-butyl (meth)acrylate, i-butyl (meth)acrylate, n-butyl (meth)acrylate, cyclohexyl (meth)acrylate, bornyl (meth)acrylate, norbornyl (meth)acrylate, isobornyl (meth)acrylate, adamantyl (meth)acrylate, dimethyladamantyl (meth)acrylate, methylcyclohexyl (meth)acrylate, norbornylmethyl (meth)acrylate, menthyl (meth)acrylate, phenethyl (meth)acrylate, dicyclopentanyl (meth)acrylate, dicyclopentenyl (meth)acrylate, dicyclopentenyloxyethyl (meth)acrylate, cyclodecyl (meth)acrylate, 4-t-butyl cyclohexyl (meth)acrylate, and trimethyl cyclohexyl (meth)acrylate. Monomer (b) may be used alone or in combination of two or more.

As for copolymer (B), an ethylene-alkyl (meth)acrylate copolymer is preferred, more preferably an ethylene-alkyl acrylate copolymer, even more preferably an ethylene-methyl acrylate copolymer, from the viewpoints of transparency and impact resistance of the (meth)acrylic resin shaped article. Copolymer (B) may be further copolymerized with an unsaturated carboxylic anhydride such as maleic anhydride and itaconic anhydride. Copolymer (B) may be a random copolymer or a block copolymer.

The content of the alkyl (meth)acrylate unit in copolymer (B) is preferred to be 15∼40 mass%. When the content of an alkyl (meth)acrylate unit is 15 mass% or greater, solubility of copolymer (B) to methyl methacrylate is likely to be excellent, resulting in excellent transparency of the obtained (meth)acrylic resin shaped article. On the other hand, when the content of the alkyl (meth)acrylate unit is 40 mass% or less, the (meth)acrylic resin shaped article is likely to exhibit excellent transparency and impact resistance. The content of the olefin unit in copolymer (B) is preferred to be 60∼85 mass%.

### [(Meth)acrylic Resin Composition and Method for Producing Same]

The (meth)acrylic resin composition contains (meth)acrylic polymer (A) and copolymer (B).

The content of copolymer (B) in the (meth)acrylic resin composition is preferred to be 0.001∼5 parts by mass based on 100 parts by mass of (meth)acrylic polymer (A). When the content of copolymer (B) is at least 0.001 parts by mass, the (meth)acrylic resin shaped article is likely to exhibit excellent impact resistance, and when the content is no greater than 5 parts by mass, the (meth)acrylic resin shaped article is likely to exhibit excellent transparency. The lower limit of copolymer (B) is preferred to be no less than 0.002 parts by mass, more preferably no less than 0.01 parts by mass, and especially preferably no less than 0.02 parts by mass. The upper limit of copolymer (B) is preferred to be no greater than 3 parts by mass, more preferably no greater than 1 part by mass, and especially preferably no greater than 0.7 parts by mass. The (meth)acrylic resin composition may be in a state of powder or pellets, for example.

In a method for producing the (meth)acrylic resin composition according to an embodiment of the present invention, (meth)acrylic polymer (A) is obtained by polymerizing the later-described monomer material in the presence of copolymer (B) using the later-described initiator. Accordingly, impact resistance and transparency are improved in the (meth)acrylic resin shaped article to be obtained as described later.

As for producing a powder of the (meth)acrylic resin composition, for example, JP2006-193647A describes the following method: methyl methacrylate is polymerized after being dispersed in water using a dispersion stabilizer, and then a cleansing and dehydration process, and a vacuum drying process are employed to obtain a powdery composition. As for producing a pellet of the (meth)acrylic resin composition, for example, the powdery composition obtained above is extruded to produce pellets, or pellets are also produced when the monomer material undergoes bulk polymerization in a reaction vessel, and then the reaction product is extruded while separating and removing the unreacted monomer material, as described in JP2000-26507A.

### [The Initiator] .

The initiator has the structure represented by formula (1) below, and is used in a polymerization process of the monomer material.

(CH₃)₃C-O-O-CO-R (1)

(in formula (1), "R" is a hydrocarbon group having 1∼20 carbon atoms or an alkoxy group having 1∼20 carbon atoms)

"R" is a hydrocarbon group having 1∼20 carbon atoms or an alkoxy group having 1∼20 carbon atoms: it may be a straight chain or branched chain, or it may be cyclic. In addition, "R" may be saturated or unsaturated. Examples of the hydrocarbon group are aliphatic groups and aryl groups. Also, at least one group selected from among halogen groups, hydroxyl groups, aryl groups, carboxyl groups, carbonyl groups and ester groups may be included in "R" as a substituent.

Examples of the initiator are, t-butyl peroxypivalate (PBPV) (10-hour half-life temperature: 55°C), t-butyl peroxy neoheptanoate (PBNHP) (10-hour half-life temperature: 51°C), t-butyl peroxy neodecanoate (PBND) (10-hour half-life temperature: 46°C), t-butyl peroxy-2-ethylhexanoate (10-hour half-life temperature: 72°C), t-butylperoxy laurate (10-hour half-life temperature: 98°C), t-butyl peroxy acetate (10-hour half-life temperature: 102°C), t-butyl peroxy isobutyrate (10-hour half-life temperature: 82°C), t-butyl peroxy isononanoate (10-hour half-life temperature: 102°C), t-butyl peroxy benzoate (10-hour half-life temperature: 104°C), t-butyl peroxy-3,5,5-trimethyl hexanoate (10-hour half-life temperature: 97°C), t-butyl peroxy maleic acid: (10-hour half-life temperature: 96°C), t-butyl peroxy isopropyl monocarbonate (10-hour half-life temperature: 99°C), t-butyl peroxy-2-ethylhexyl monocarbonate (10-hour half-life temperature: 99°C), di-t-butyl peroxyhexa hydro terephthalate (10-hour half-life temperature: 83°C), and 1,6-di-(t-butyl peroxy carbonyloxy) hexane (10-hour half-life temperature: 97°C). The initiator may be used alone or in combination of two or more.

Among those listed above, the following are preferred as the initiator from the standpoint of durability of the subsequently obtained (meth)acrylic resin shaped article: t-butyl peroxypivalate (PBPV), t-butyl peroxy neoheptanoate (PBNHP), t-butyl peroxy neodecanoate (PBND), t-butyl peroxy-2-ethylhexanoate, t-butyl peroxy laurate, t-butyl peroxy acetate, t-butyl peroxy isobutyrate, and t-butyl peroxy isononanoate. Among the above, t-butyl peroxypivalate (PBPV), t-butyl peroxy neoheptanoate (PBNHP) and t-butyl peroxy neodecanoate (PBND) are more preferred.

The feed amount of the initiator is preferred to be 0.005∼2 parts by mass based on 100 parts by mass of the monomer material. When the feed amount of the initiator is at least 0.005 parts by mass, the (meth)acrylic resin shaped article is likely to exhibit excellent durability, and when the feed amount is no greater than 2 parts by mass, the productivity and durability of the (meth)acrylic resin shaped article are likely to be excellent. The lower limit of the feed amount of the initiator is preferred to be no less than 0.01 part by mass, and the upper limit is preferred to be no greater than 1 part by mass.

When the initiator is used, generated radicals are likely to be capable of causing a high level of hydrogen-atom abstraction reactions. Thus, it is thought that the initiator abstracts hydrogen atoms from copolymer (B), causing graft reactions originating at the sites of abstracted hydrogen atoms. Accordingly, the (meth)acrylic resin composition and (meth)acrylic resin shaped article are likely to exhibit excellent transparency, impact resistance and durability. Here, hydrogen abstraction capability is an index showing the ease of generating hydrogen abstraction reactions, which is one of the reactions related to the radicals generated from an organic peroxide. Generally speaking, when a vinyl monomer is polymerized using an organic peroxide highly capable of generating hydrogen-atom abstraction reactions, in addition to polymerization reactions in which generated radicals are added to the vinyl monomer, hydrogen abstraction reactions tend to occur to abstract hydrogen from the substance such as the solvent, additives or the like which are more likely to give off hydrogen. Therefore, as a polymerization method for producing the (meth)acrylic resin composition, it is preferred to select a bulk polymerization method without using solvents such as toluene from which hydrogen atoms tend to be abstracted, because such a method is likely to provide the (meth)acrylic resin shaped article with excellent transparency, impact resistance and durability. The hydrogen abstraction capability of an organic peroxide can be determined by methods described in various publications (for example, Polymer Journal (1997) 29, 366, Polymer Journal (1997) 29, 940, Polymer Journal (1997) 29, 733, and the like).

Also, the 10-hour half-life temperature of the initiator is preferred to be 40∼80°C in consideration of the polymerization (especially bulk polymerization) of the monomer material. When the 10-hour half-life temperature of the initiator is at least 40°C, such selecting of the initiator is likely to suppress a decrease in productivity of (meth)acrylic resin shaped articles, or to suppress a decrease of properties of the (meth)acrylic resin shaped article such as heat tolerance and mechanical strength caused by residual monomers. When the 10-hour half-life temperature of the initiator is no higher than 80°C, foaming is likely to be suppressed during polymerization for producing the (meth)acrylic resin shaped article.

In the embodiments of the present invention, a polymerization initiator other than the initiator can be used with the initiator. Examples of a polymerization initiator other than the initiator are, azo-type polymerization initiators such as 2,2'-azobis(4-methoxy-2,4-dimethyl valeronitrile), 2,2'-azobis isobutyronitrile, and 2,2'-azobis-(2,4-dimethyl valeronitrile) (CN); organic peroxide initiators such as dilauroyl peroxide, diisopropyl peroxy dicarbonate, dibenzoyl peroxide, bis(4-t-butyl cyclohexyl) peroxy dicarbonate, t-hexylperoxy pivalate (HPP), 1,3,3-tetramethyl butyl peroxy-2-ethylhexanoate (POO), and t-hexylperoxy isopropyl monocarbonate (PHI). Those listed above may be used alone or in combination of two or more. The feed amount of an initiator used along with the initiator is preferred to be 0.01∼1 part by mass based on the total 100 parts by mass of the monomer material.

### [The Monomer Material]

The monomer material contains methyl methacrylate and is used as a raw material for producing a (meth)acrylic polymer (A). The monomer material may contain a vinyl monomer other than methyl methacrylate. Specific examples of a vinyl monomer other than methyl methacrylate are monomer (b), monomer (c) and monomer (d).

Examples of a polymerization method for the monomer material are bulk polymerization, solution polymerization, emulsion polymerization, and suspension polymerization. Among those, bulk polymerization is preferred from the viewpoints of production cost of the (meth)acrylic resin composition, load on the environment by use of solvents, and productivity, transparency, impact resistance and durability of the obtained (meth)acrylic resin shaped article. The polymerization temperature for the monomer material is preferred to be 40°C or higher, more preferably 50°C or higher, because the polymerization time will be shortened. In addition, the polymerization temperature for the monomer material is preferred to be 180°C or lower, more preferably 150°C or lower, because foaming is suppressed during the polymerization for forming a (meth)acrylic resin shaped article. The polymerization duration for the monomer material is appropriately determined by observing the progress of the polymerization.

When the monomer material is polymerized, various additives such as follows may be added if they are needed: a chain transfer agent for the adjustment of molecular weight, stabilizers such as antioxidants and UV absorbers, flame retardants, dyes, pigments, and mold release agents.

### [(Meth)acrylic Resin Shaped Article]

The (meth)acrylic resin shaped article related to the present invention contains a (meth)acrylic resin composition according to an embodiment of the present invention. The (meth)acrylic resin shaped article is formed into a sheet. The (meth)acrylic resin shaped article is preferred to be as follows: thickness is 2 mm or less; 50% impact-failure height tested according to ISO 6603-1 is 100 mm or greater; and the change in haze values is no greater than 1% before and after thermal cycle testing under the conditions shown below.

A 50% impact-failure height based on ISO 6603-1 is determined by the following method.

### <50% Impact-Failure Height>

size of test piece: 50 mm×50 mm square
size of support base: a 5 mm-thick acrylic plate with a 20 mm-diameter circular hole formed therein
size of ball to be dropped: a stainless steel ball (ball diameter of 20.0 mm ϕ, mass of 35.9 g)
temperature of test ambience: 23°C
relative humidity of test ambience: 50%
duration for leaving the test piece in the test ambient before testing: 24 hours or longer test method: ISO 6603-1

A test piece is placed on the support base in such a way that the center of the hole of the support base corresponds to the center of the test piece. Then, the right and left sides of the test piece are fixed to the support base using cellophane tape. Under conditions of temperature at 23°C and relative humidity at 50%, a stainless steel ball is dropped on the center of the test piece. The height of dropping the ball is changed every 25 mm, and a 50% impact-failure height is determined when 50% of test pieces are damaged. The number of test pieces at each test height is 20.

Thermal cycle testing is conducted by employing the following method.

### <Thermal Cycle Testing Method>

size of test piece: 10 mm×10 mm square
temperature inside chamber: 85±0.5°C in high-temperature chamber, -40±0.5°C in low-temperature chamber,
holding duration in chamber: 30 minutes in high-temperature chamber, 30 minutes in low-temperature chamber,
time spent for transferring between high-temperature chamber and low-temperature chamber: 10 seconds or shorter (within 3 minutes after a test piece is transferred, the chamber temperature is set to hold the predetermined temperature)
number of cycles: 72
   (one cycle: "expose test piece in high-temperature chamber" → "transfer test piece from high-temperature chamber to low-temperature chamber" → "expose test piece to low-temperature chamber" → "transfer test piece from low-temperature chamber to high-temperature chamber")

The (meth)acrylic resin shaped article related to the present invention is suitable for optical uses such as the front-surface plate of a liquid-crystal display, or touch panel. Regarding the transparency of the (meth)acrylic resin shaped article, the change in haze values before and after thermal cycle testing is preferred to be 1% or less, more preferably 0.5% or less, and even more preferably 0.2% or less, from the viewpoint of the visibility of a display. Regarding the impact resistance of the (meth)acrylic resin shaped article, a 50% impact-failure height is preferred to be 100 mm or greater, more preferably 350 mm or greater, to protect the liquid crystal of the display. The thickness of the (meth)acrylic resin shaped article is preferred to be 2 mm or less, more preferably 1.5 mm or less, even more preferably 1 mm or less, from the viewpoint of making a lightweight liquid-crystal display.

The content of copolymer (B) in the (meth)acrylic resin shaped article related to the present invention is preferred to be 0.001∼5 parts by mass based on 100 parts by mass of (meth)acrylic polymer (A). When the content of copolymer (B) is at least 0.001 part by mass, the (meth)acrylic resin shaped article is likely to exhibit excellent impact resistance, and when it is no greater than 5 parts by mass, the (meth)acrylic resin shaped article is likely to exhibit excellent transparency. The lower limit of the content of copolymer (B) is preferred to be at least 0.002 parts by mass, more preferably at least 0.01 parts by mass, especially preferably at least 0.02 parts by mass. The upper limit of the content of copolymer (B) is preferred to be no greater than 3 parts by mass, more preferably no greater than 1 part by mass, especially preferably no greater than 0.7 parts by mass.

### [Method for Producing (Meth)acrylic Resin Shaped Article]

The (meth)acrylic resin shaped article is produced by the following method, for example. Namely, a method for producing the (meth)acrylic resin shaped article includes steps (1a), (2a) and 3 described below; in at least either step (1a) or (2a), polymerization is conducted in the presence of copolymer (B); and in at least either step (1a) or (2a), polymerization is conducted by using the initiator.

### (Step 1a)

A step for preparing the syrup by polymerizing at least part of the monomer material.

### (Step 2a)

A step for producing the (meth)acrylic resin shaped article by pouring into a mold the syrup and, if necessary, the remaining monomer material, and by conducting polymerization.

### (Step 3)

A step for taking out the (meth)acrylic resin shaped article from the mold.

### [Syrup]

The syrup is a mixture produced in step (1a) or a mixture containing a polymerized product obtained by polymerizing at least part of the monomer material as well as the remaining unreacted monomer material. When part of the monomer material is used for preparing a syrup, the remaining monomer material may be added to the syrup, and they are polymerized in step (2a) to obtain the (meth)acrylic resin shaped article. Also, when all the monomer material is used for preparing a syrup, the syrup is polymerized in step (2a) to obtain a (meth)acrylic resin shaped article.

### [Step 1a]

Step (1a) is for preparing a viscous liquid syrup, which is a mixture of at least part of the monomer material and the polymerized product of at least part of the monomer material. Step (1a) is for preparing a viscous liquid syrup, which is, for example, a mixture of methyl methacrylate and polymethyl methacrylate, or a mixture of methyl methacrylate and a vinyl monomer other than methyl methacrylate, and a copolymer having a methyl methacrylate unit and a unit of a vinyl monomer other than methyl methacrylate.

The polymerization rate of the obtained syrup is preferred to be 5∼45 mass%. When the polymerization rate of the syrup is at least 5 mass%, the polymerization time is shortened during cast polymerization, and defects in the exterior appearance tend not to occur in the (meth)acrylic resin shaped article. When the polymerization rate of the syrup is no greater than 45 mass%, the viscosity of the syrup is appropriate, and the processability of the syrup tends to be thereby improved. To shorten the polymerization time for the syrup and to minimize the defects in the exterior appearance of the (meth)acrylic resin shaped article, the polymerization rate of the syrup is preferred to be high. However, to improve the processability of the syrup and the ease of dispersing an additive into the syrup, the polymerization rate of the syrup is preferred to be low. Considering both viewpoints, the polymerization rate of the syrup is more preferred to be 10∼40 mass%.

As a method for adjusting the polymerization rate of the syrup at 5∼45 mass%, the following method may be used, for example. First, into a reaction vessel equipped with a thermometer and a stirrer, at least part of the monomer material, and if necessary, copolymer (B) and other additives are provided. Next, heat is applied to the mixture while stirring the mixture in the reaction vessel, and the initiator or another polymerization initiator is added to carry out polymerization. After the polymerization process, the reacted liquid is cooled to finish the polymerization.

A polymerization inhibitor may be added to the obtained syrup, if necessary, so as to prevent coloration or self-polymerization. Examples of a polymerization inhibitor are hydroquinone, hydroquinone monomethyl ether, 2,6-di-t-butyl-4-methylphenol, and 2,4-dimethyl-6-t-butylphenol. They may be used alone or in combination of two or more.

### [Mold]

The mold to be used in embodiments of the present invention is a cell casting mold or a continuous casting mold, for example. A cell casting mold is structured to have a sealed space formed with a pair of plates made of inorganic glass, chrome-plated metal plates, stainless-steel plates or the like, which are positioned opposite each other at a predetermined distance, and with a gasket inserted around their peripheries. A continuous casting mold is structured to have a sealed space formed with opposing surfaces of a pair of endless belts made of chrome-plated metal plates, stainless steel or the like and the gaskets positioned on both side portions of the endless belts. The endless belts and gaskets are all set to run in the same direction at the same speed.

### [Step 2a]

In step (2a), the syrup prepared in step (1a) and, if necessary, the remaining monomer material, are poured into a mold and polymerized (cast polymerization) to produce the (meth)acrylic resin shaped article. A cast polymerization method may be conducted by using a mold formed with two plates positioned opposite each other at a predetermined distance and a sealing member positioned on their peripheries and by pouring into the mold the syrup and, if necessary, the remaining monomer material, to carry out polymerization. The (meth)acrylic resin shaped article formed in the mold is taken out of the mold in later-described step 3. Such a cast polymerization method is preferred to be employed in articles for optical purposes that require transparency.

In a method for producing the (meth)acrylic resin shaped article related to the present invention, excellent impact resistance, transparency and durability are achieved in the obtained (meth)acrylic resin shaped article by conducting polymerization in the presence of copolymer (B) at least in the above step (1a) or (2a), while conducting polymerization by using the initiator at least in the above step (1a) or (2a).

In a method for producing the (meth)acrylic resin shaped article related to the present invention, there are nine possible combinations for when to add copolymer (B) and the initiator:
(1): to add copolymer (B) and the initiator only in step (1a);
(2): to add copolymer (B) only in step (1a), and add the initiator only in step (2a);
(3): to add the initiator only in step (1a), and add copolymer (B) only in step (2a);
(4): to add copolymer (B) and the initiator only in step (2a);
(5): to add copolymer (B) in both steps (1a) and (2a), and add the initiator only in step (1a);
(6): to add copolymer (B) in both steps (1a) and (2a), and add the initiator only in step (2a);
(7): to add the initiator in both steps (1a) and (2a), and add copolymer (B) only in step (1a);
(8): to add the initiator in both steps (1a) and (2a), and add copolymer (B) only in step (2a); and
(9): to add copolymer (B) and the initiator in both steps (1a) and (2a).

A polymerization inhibitor may be added to the syrup used in step (2a) and, if necessary, to the remaining monomer material, so as to prevent coloration or self-curing. Examples of a polymerization inhibitor are the same types that can be added to the syrup. Such inhibitors may be used alone or in combination thereof. Also, in step (2a), various additives such as a chain transfer agent for the adjustment of molecular weight, stabilizers such as antioxidants and ultraviolet absorbers, flame retardants, dyes, pigments, mold release agents and the like may be added to the syrup and, if necessary, to the remaining monomer material.

### [Step 3]

Step 3 is for taking out the (meth)acrylic resin shaped article produced in step (2a) from the mold.

Instead of employing the above-described production method, the (meth)acrylic resin shaped article may also be produced by the production method that includes steps (1b), (2b) and 3 below.

### (Step 1b)

A step for preparing the later-described polymer mixture that contains the monomer material, copolymer (B) and the initiator.

### (Step 2b)

A step for producing the (meth)acrylic resin shaped article by pouring the polymer mixture into a mold and by conducting polymerization.

### (Step 3)

A step for taking out the (meth)acrylic resin shaped article from the mold.

### [Step 1b]

Step (1b) is for preparing the later-described polymer mixture that contains the monomer material, copolymer (B) and the initiator. An example of a method for preparing a polymer mixture is as follows: the monomer material, copolymer (B), the initiator and, if necessary, other additives and a polymerization initiator other than the initiator, are put into a vessel, and the mixture is stirred while applying heat, if necessary, until the mixture is homogeneously mixed.

### [Polymer Mixture]

A polymer mixture contains the monomer material, copolymer (B) and the initiator, and is prepared in step (1b). If necessary, another polymerization initiator may be added to the polymer mixture. To prevent coloration and self-curing, a polymerization inhibitor may be added to the polymer mixture, if necessary. Examples of a polymerization inhibitor are the same types that can be added to the syrup. Such inhibitors may be used alone or in combination thereof. Also, various additives such as a chain transfer agent for the adjustment of molecular weight, stabilizers such as antioxidants and UV absorbers, flame retardants, dyes, pigments, mold release agents and the like may be added, if necessary, to the polymer mixture.

### [Step 2b]

Step (2b) is for producing the (meth)acrylic resin shaped article by pouring the polymer mixture obtained in step (1b) into a mold and by polymerizing the mixture.

### [Step 3]

Step 3 is for taking out from the mold the (meth)acrylic resin shaped article obtained in step (2b).

In the embodiments of the present invention, when the obtained (meth)acrylic resin shaped article is shaped as a plate, a cured layer may be laminated at least on either surface. The cured layer may have at least one of the following properties: scratch resistance, antireflectiveness, antiglaring, antifouling, antistaticity, shatterproofness, tackiness, adhesiveness, softness and the like.

A curable composition as raw material for a curd layer is cured by active energy rays such as electron beams, radiation rays and ultraviolet rays, or by applying heat. Examples of a curable composition are those containing a radical polymerizable compound such as later-described active energy ray-curable compositions, or those containing a condensation polymerizable compound such as alkoxysilane and alkylalkoxysilane. A curable composition may contain both a radical polymerizable compound and a condensation polymerizable compound.

As for an active energy ray-curable composition, a UV-curable composition is preferred from the viewpoints of productivity and physical properties of a (meth)acrylic resin shaped article. A UV-curable composition is preferred to be a compound having at least two (meth)acryloyloxy groups in the molecule and a photoinitiator, from the viewpoints of productivity of the (meth)acrylic resin shaped article. Examples of compounds having at least two (meth)acryloyloxy groups in the molecule are as follows: ester compounds obtained from 1 mole of polyhydric alcohol and at least 2 moles of (meth)acrylic acid or its derivative; and ester compounds obtained from polyhydric alcohol, polycarboxylic acid or its anhydride, and (meth)acrylic acid or its derivative.

Specific examples of an ester compound obtained from 1 mole of polyhydric alcohol and at least 2 moles of (meth)acrylic acid or its derivative are, polyethylene glycol di(meth)acrylates such as diethylene glycol di(meth)acrylate, triethylene glycol di(meth)acrylate, and tetraethylene glycol di(meth)acrylate; alkyl diol di(meth)acrylates such as 1,4-butanediol di(meth)acrylate, 1,6-hexanediol di(meth)acrylate, and 1,9-nonanediol di(meth)acrylate; and trifunctional or higher polyolpoly(meth)acrylates such as trimethylol propane tri(meth)acrylate, trimethylol ethane tri(meth)acrylate, pentaglycerol tri(meth)acrylate, pentaerythritol tri(meth)acrylate, pentaerythritol tetra(meth)acrylate, glycerol tri(meth)acrylate, dipentaerythritol tri(meth)acrylate, dipentaerythritol tetra(meth)acrylate, dipentaerythritol penta(meth)acrylate, dipentaerythritol hexa(meth)acrylate, tripentaerythritol tetra(meth)acrylate, tripentaerythritol penta(meth)acrylate, tripentaerythritol hexa(meth)acrylate, and tripentaerythritol hepta(meth)acrylate. Those listed above may be used alone or in combination of two or more.

Combinations of polyhydric alcohol, polycarboxylic acid or its anhydride, and (meth)acrylic acid or its derivative are, for example, malonic acid / trimethylolethane / (meth)acrylic acid, malonic acid / trimethylolpropane / (meth)acrylic acid, malonic acid / glycerine / (meth)acrylic acid, malonic acid / pentaerythritol / (meth)acrylic acid, succinic acid / trimethylolethane / (meth)aciylic acid, succinic acid / trimethylolpropane / (meth)acrylic acid, succinic acid / glycerine / (meth)acrylic acid, succinic acid / pentaerythritol / (meth)acrylic acid, adipic acid / trimethylolethane / (meth)acrylic acid, adipic acid / trimethylolpropane / (meth)acrylic acid, adipic acid / glycerine / (meth)acrylic acid, adipic acid / pentaerythritol / (meth)acrylic acid, glutaric acid / trimethylolethane / (meth)acrylic acid, glutaric acid / trimethylolpropane / (meth)acrylic acid, glutaric acid / glycerine / (meth)acrylic acid, glutaric acid / pentaerythritol / (meth)acrylic acid, sebacic acid / trimethylolethane / (meth)acrylic acid, sebacic acid / trimethylolpropane / (meth)acrylic acid, sebacic acid / glycerine / (meth)acrylic acid, sebacic acid / pentaerythritol / (meth)acrylic acid, fumaric acid / trimethylolethane / (meth)acrylic acid, fumaric acid / trimethylolpropane / (meth)acrylic acid, fumaric acid / glycerine / (meth)acrylic acid, fumaric acid / pentaerythritol / (meth)acrylic acid, itaconic acid / trimethylolethane / (meth)acrylic acid, itaconic acid / trimethylolpropane / (meth)acrylic acid, itaconic acid / glycerine / (meth)acrylic acid, itaconic acid / pentaerythritol / (meth)acrylic acid, maleic anhydride / trimethylolethane / (meth)acrylic acid, maleic anhydride / trimethylolpropane / (meth)acrylic acid, maleic anhydride / glycerine / (meth)acrylic acid, and maleic anhydride / pentaerythritol / (meth)acrylic acid. The ester compounds obtained by the above-listed combinations may be used alone or in combinations of two or more.

Specific examples of other compounds having at least two (meth)acryloyloxy groups in the molecule are, urethane (meth)acrylates obtained by reacting 1 mole of polyisocyanate obtained by trimerization of diisocyanate (for example, trimethylol propane toluylene diisocyanate, hexamethylene diisocyanate, tolylene diisocyanate, diphenylmethane diisocyanate, xylene diisocyanate, 4,4'-methylenebis(cyclohexyl isocyanate), isophorone diisocyanate, and trimethyl hexamethylene diisocyanate) and at least 3 moles of acrylic monomer having active hydrogen (for example, 2-hydroxyethyl (meth)acrylate, 2-hydroxypropyl (meth)acrylate, 2-hydroxy-3-methoxypropyl (meth)acrylate, N-methylol (meth)acrylamide, N-hydroxy (meth)acrylamide, 1,2,3-propanetriol-1,3-di(meth)acrylate, and 3-acryloyloxy-2-hydroxypropyl (meth)acrylate); poly[(meth)acryloyloxy ethylene]isocyanurates such as di(meth)acrylates or tri(meth)acrylates of tris(2-hydroxyethyl)isocyanuric acid; epoxypoly(meth)acrylates; and urethane poly(meth)acrylates. Those listed above may be used alone or in combination of two or more.

Specific examples of a photoinitiator used for the ultraviolet-curable composition are carbonyl compounds such as benzoin, benzoin methyl ether, benzoin ethyl ether, benzoin isopropyl ether, benzoin isobutyl ether, acetoin, butyroin, toluoin, benzyl, benzophenone, p-methoxy-benzophenone, 2,2-diethoxy acetophenone, α,α-dimethoxy-α-phenyl acetophenone, methyl phenyl glyoxylate, ethyl phenyl glyoxylate, 4,4'-bis(dimethylamino) benzophenone, 1-hydroxy-cyclohexyl-phenyl-ketone, and 2-hydroxy-2-methyl-1-phenylpropane-1-one; sulfur compounds such as tetramethyl thiuram monosulfide and tetramethyl thiuram disulfide; and phosphorus compounds such as 2,4,6-trimethyl benzoyl diphenyl phosphine oxide, bis (2,4,6-trimethyl benzoyl)-phenyl phosphine oxide, and benzoyl diethoxyphosphine oxide. Those listed above may be used alone or in combination of two or more.

The thickness of a cured layer is preferred to be 1∼100 µm, more preferably 1∼30 µm, considering the surface hardness and the exterior appearance of the (meth)acrylic resin shaped article obtained by production methods according to the present invention.

The amount of a photoinitiator in the ultraviolet-curable composition is preferred to be at least 0.1 part by mass from the viewpoint of curability when ultraviolet rays are irradiated thereon, and no greater than 10 parts by mass from the viewpoint of coloring caused by irradiation of ultraviolet rays, based on 100 parts by mass of an ultraviolet-curable compound. Two or more photoinitiators may be used together.

If necessary, curable compositions may contain various additives such as leveling agents, conductive materials, inorganic fine particles, and photostabilizers (ultraviolet-ray absorbers, HALS or the like). The total amount of various additives is preferred to be no greater than 10 parts by mass based on 100 parts by mass of the curable composition, considering the transparency of the (meth)acrylic resin shaped article.

A (meth)acrylic resin shaped article may have a functional layer other than a cured layer either on the cured layer or between the (meth)acrylic resin shaped article and the cured layer; alternatively, a functional layer may be formed both on the cured layer and between the (meth)acrylic resin shaped article and the cured layer. A functional layer is, for example, an antireflective, antiglaring, antifouling, antistatic, shatterproof, tacky, adhesive or soft layer. The functional layer has at least one of such properties, or two or more functional layers may be formed.

As for a method for producing the (meth)acrylic resin shaped article having a surface-cured layer, (1) a transfer method and (2) a coating method described below may be used, for example.

### (1) Transfer Method

A transfer method is conducted, for example, by using a mold where a cured layer is formed on at least part of the inner surface. In such a mold, the syrup and, if necessary, the remaining monomer material, or the polymer mixture is poured and polymerized to form a (meth)acrylic resin shaped article, and then the (meth)acrylic resin shaped article along with the cured layer is taken out from the mold. Accordingly, the (meth)acrylic resin shaped article with a surface-cured layer is obtained.

### (2) Coating Method

A coating method is conducted, for example, by coating the curable composition on at least part of the surface of the (meth)acrylic resin shaped article, and by curing the composition. Accordingly, the (meth)acrylic resin shaped article with a surface cured layer is obtained.

### EXAMPLES

The present invention is described by referring to the following examples. In following descriptions, "part" indicates "part by mass." The haze value, impact resistance and durability of shaped articles are evaluated by the following methods.

### (1) Haze

Based on JIS K7136, the initial haze value before heat shock testing of a shaped article and the haze value after heat shock testing were measured using "Haze Meter NDH2000" (brand name) made by Nippon Denshoku Industries, Co., Ltd.

### (2) Impact Resistance

A test piece of a 50×50 mm square was cut out from a shaped article, and its impact resistance was evaluated by obtaining a 50% impact-failure height under conditions based on ISO 6603-1 except for those described in the following ball dropping test method.

### <Ball Dropping Test Method>

Prior to testing, the test piece was left for 24 hours or longer in a test ambience of temperature at 23°C and relative humidity at 50%. Then, the test piece was placed on a support base (a 5 mm-thick acrylic plate with a 20 mm-diameter circular hole formed in the center) in such a way that the hole center corresponds to the center of the test piece. The left and right sides of the test piece were secured to the support base using cellophane tape. Under conditions of temperature at 23°C and relative humidity at 50%, a stainless steel ball (ball diameter: 20.0 mm ϕ, mass: 35.9 g) was dropped onto the center of the test piece. The height for dropping the ball was changed every 25 mm, and the number of test pieces was 20 for each height.

### (3) Durability

### <Thermal Cycle Testing>

size of test piece: 10 mm×10 mm square
temperature inside chamber: 85±0.5°C in high-temperature chamber, -40±0.5°C in low-temperature chamber,
holding duration in chamber: 30 minutes in high-temperature chamber, 30 minutes in low-temperature chamber,
time spent for transferring between high-temperature chamber and low-temperature chamber:
10 seconds or shorter (within 3 minutes after the test piece is transferred, the chamber temperature is set to hold the predetermined temperature)
number of test cycles: 72
   (one cycle: "expose test piece in high-temperature chamber" → "transfer test piece from high-temperature chamber to low-temperature chamber" → "expose test piece to low-temperature chamber" → "transfer test piece from low-temperature chamber to high-temperature chamber")

The haze level was measured before and after testing, and the durability of a test piece was evaluated by determining the difference in haze values - Δ haze (%) - before and after testing.

### <Production Example 1> Production of Mold (1)

Two stainless-steel plates (SUS304, 300 mm×300 mm, 30 mm thick) were set to face each other and a soft polyvinyl chloride gasket was set around their peripheries to obtain mold (1).

### <Production Example 2> Production of Mold (2)

On a stainless-steel plate (SUS304, 300 mm×300 mm, 30 mm thick), an ultraviolet curable composition is coated; the composition contains 50 parts of condensation mixture having succinic acid / trimethylolethane / acrylic acid at a molar ratio of 1:2:4, 50 parts of 1,6-hexanediol diacrylate (brand name: C6DA, made by Osaka Organic Chemical Industry Ltd.), and 2 parts of benzoin ethyl ether (brand name: Seikuol BEE, made by Seiko Chemical Co., Ltd.). A 12 µm-thick polyethylene terephthalate film (PET film) was laminated on the coating. Then, using a rubber roll with a rubber hardness of JIS 40, the laminate was pressed to squeeze out the excess amount of the ultraviolet curable composition while preventing air bubbles, and a 15 µm-thick coating layer was formed. The thickness of the coating layer was calculated from the feed amount of the ultraviolet curable composition and the developed area (530 cm²).

Next, the laminate with the PET-film side facing upward was passed 20 cm below a 40W fluorescent ultraviolet lamp (brand name: FL40BL, made by Toshiba Lighting & Technology Corporation) at a speed of 1.0 m/min. to irradiate the coating layer with ultraviolet rays via the PET film at a total light irradiation of 12 mJ/cm². Accordingly, the ultraviolet-curable composition was cured.

Next, the PET film was removed, and the laminate with the coating-layer side facing upward was passed 20 cm below a 9.6 kW high-pressure mercury lamp at a speed of 3.0 m/min. to irradiate the coating layer with ultraviolet rays at a total light irradiation of 650 mJ/cm². Accordingly, a stainless-steel plate with a 13 µm-thick cured layer formed thereon was obtained (hereinafter referred to as a "stainless-steel plate (i) with a cured layer). The thickness of the cured layer was obtained from a cross-sectional image of the obtained laminate taken with a differential interference contrast microscope.

Using a stainless-steel plate of the same size, another stainless-steel plate (i) with a cured layer was prepared by the same procedures. Those two stainless-steel plates (i) each having a cured layer were positioned opposite each other with the cured layers placed inside. Then, their peripheries were sealed with a soft polyvinyl chloride gasket to obtain mold (2).

### <Production Example 3> Production of Mold (3)

On a stainless-steel plate (SUS304, 300 mm×300 mm, 30 mm thick), an ultraviolet curable composition was coated. The composition contains the following: 30 parts of a mixture of dipentaerythritol pentaacrylate and dipentaerythritol hexaacrylate (brand name: DPHA, made by Nippon Kayaku Co., Ltd.); 10 parts of a urethane compound obtained by reacting 1 mole of triisocyanate formed by trimerization of hexamethylene diisocyanate to 3 moles of 3-acryloyloxy-2-hydroxypropyl methacrylate (brand name: U-6HA, made by Shin-Nakamura Chemical Co., Ltd.); 30 parts of a mixture of pentaerythritol triacrylate and pentaerythritol tetraacrylate (brand name: M305, made by Toagosei Co., Ltd.); 30 parts of 1,6-hexanediol diacrylate (brand name: C6DA, made by Osaka Organic Chemical Industry Ltd.); and 1.5 parts of benzoin ethyl ether (brand name: Seikuol BEE, made by Seiko Chemical Co., Ltd.). Next, a 12 µm-thick polyethylene terephthalate film (PET film) was laminated on the coating. Then, using a rubber roll with a rubber hardness of JIS 40, the laminate was pressed to squeeze out the excess amount of the ultraviolet curable composition while preventing air bubbles, and a 30 µm-thick coating layer was formed. The thickness of the coating layer was calculated from the feed amount of the ultraviolet curable composition and the developed area (530 cm²).

Next, the laminate with the PET-film side facing upward was passed 20 cm below a 40W fluorescent ultraviolet lamp (brand name: FL40BL, made by Toshiba Lighting & Technology Corporation) at a speed of 1.0 m/min. to irradiate the coating layer with ultraviolet rays via the PET film at a total light irradiation of 10 mJ/cm². Accordingly, the ultraviolet-curable composition was cured.

Then, the PET film was removed, and the laminate with the coating-layer side facing upward was passed 20 cm below a 9.6 kW high-pressure mercury lamp at a speed of 3.0 m/min. to irradiate the coating layer with ultraviolet rays at a total light irradiation of 400 mJ/cm². Accordingly, a stainless-steel plate with a 26 µm-thick cured layer formed thereon was obtained (hereinafter referred to as a "stainless-steel plate (ii) with a cured layer). The thickness of the cured layer was obtained from a cross-sectional image of the obtained laminate taken with a differential interference contrast microscope.

Using a stainless-steel plate of the same size, another stainless-steel plate (ii) with a cured layer was prepared by the same procedures. Those two stainless-steel plates (ii) each having a cured layer were positioned opposite each other with the cured layers placed inside. Then, their peripheries were sealed with a soft polyvinyl chloride gasket to obtain mold (3).

### <Example 1>

### (Step 1a)

In a reaction vessel equipped with a cooling tube, thermometer and stirrer, the following was supplied: as part of the monomer material, 100 parts of methyl methacrylate (MMA) (brand name: Acryester M, made by Mitsubishi Rayon Co., Ltd.); and as copolymer (B), 0.05 parts of ethylene-methyl acrylate copolymer (EMA) (brand name: REXPEARL EMA EB050S, made by Japan Polyethylene Corporation). Heating of the mixture was begun after nitrogen gas bubbling was performed while the mixture was being stirred. When the liquid temperature reached 85°C, 0.03 parts of t-hexylperoxy pivalate (made by NOF Corporation, 70 mass% pure t-hexylperoxy pivalate) was added as a polymerization initiator. Accordingly, a syrup material was prepared. The liquid temperature of the syrup material was further raised to 100°C and kept there for 12 minutes. After that, the liquid temperature of the syrup material was cooled to room temperature and a syrup was obtained. The polymer content in the syrup was 21 mass%.

### (Step 2a)

To prepare a polymer material, the following were added to 70 parts of the syrup: 29.5 parts of MMA as the remaining monomer material; as a polymerization initiator, 0.3 parts of t-butylperoxy pivalate, as represented by formula (1) above where "R" is a t-butyl group (made by NOF Corporation, 70 mass% pure t-butylperoxy pivalate); and 0.05 parts of sodium dioctyl sulfosuccinate (brand name: AOT, made by Cytec Industries Inc.). Next, the polymer material was poured into mold (1), and the distance between opposing stainless-steel plates was adjusted to 1.6 mm. Then, the mold (1) was heated for an hour in a water bath of 80°C, and further heated for 10 minutes in an air oven of 200°C. Accordingly, a sheet-type polymer was obtained.

### (Step 3)

The sheet-type polymer was cooled, the stainless-steel plates were removed from the sheet-type polymer to obtain a 1 mm-thick methacrylic resin shaped article. The evaluation results are shown in Table 1.

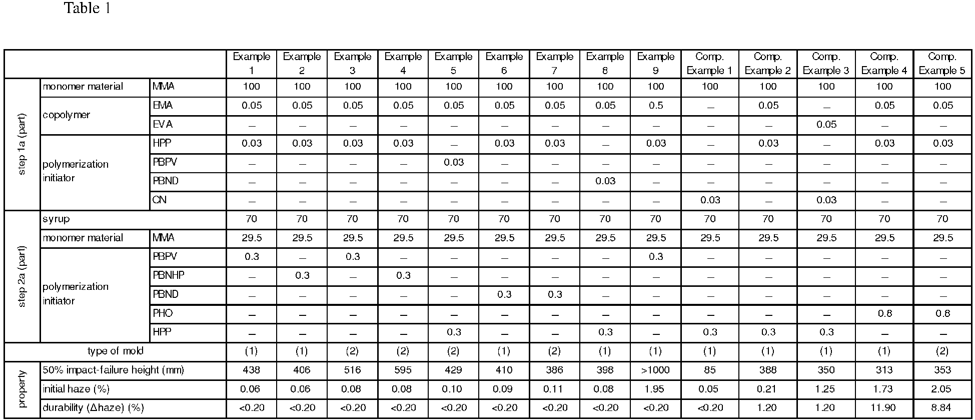

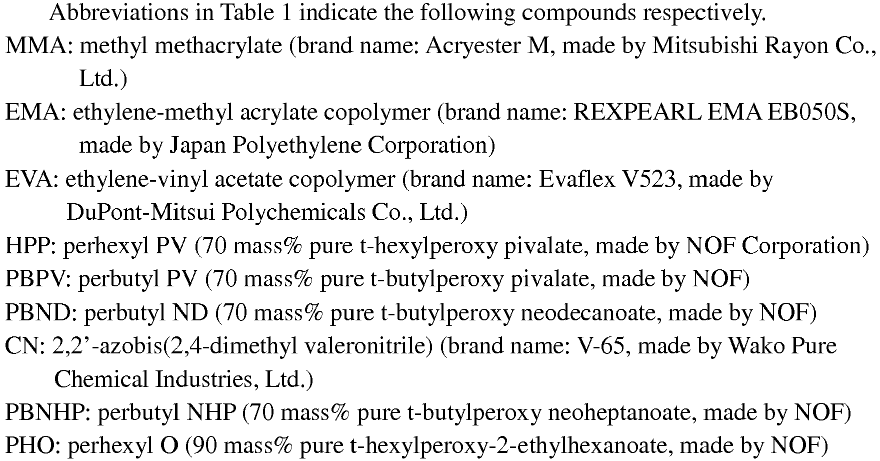

### <Example 2>

A 1 mm-thick methacrylic resin shaped article was prepared using the same procedures employed in example 1 except that the polymerization initiator used in step (2a) was changed to that shown in Table 1. The evaluation results are shown in Table 1.

### <Example 3>

A methacrylic resin shaped article was prepared using the same procedures employed in example 1 except that mold (2) was used instead of mold (1) in step (2a). A 13 µm-thick cured layer was laminated on each of both surfaces of the 1 mm-thick methacrylic resin shaped article. The evaluation results are shown in Table 1.

### <Example 4>

A 1-mm thick methacrylic resin shaped article was prepared using the same procedures employed in example 3 except that a polymerization initiator used in step (2a) was changed to that shown in Table 1. The evaluation results are shown in Table 1.

### <Example 5>

A 1 mm-thick methacrylic resin shaped article was prepared using the same procedures employed in example 3 except that the polymerization initiators used in steps (1a) and (2a) respectively were changed to those shown in Table 1. The evaluation results are shown in Table 1.

### <Example 6>

A 1 mm-thick methacrylic resin shaped article was prepared using the same procedures employed in example 1 except that the polymerization initiator used in step (2a) was changed to that shown in Table 1. The evaluation results are shown in Table 1.

### <Example 7>

A methacrylic resin shaped article was prepared using the same procedures employed in example 6 except that mold (2) was used instead of mold (1) in step (2a). A 13 µm-thick cured layer was laminated on each of both surfaces of the 1 mm-thick methacrylic resin shaped article. The evaluation results are shown in Table 1.

### <Example 8>

A 1 mm-thick methacrylic resin shaped article was prepared using the same procedures employed in example 1 except that the polymerization initiators used in steps (1a) and (2a) respectively were changed to those shown in Table 1. The evaluation results are shown in Table 1.

### <Example 9>

A 1 mm-thick methacrylic resin shaped article was prepared using the same procedures employed in example 1 except that the feed amount of copolymer (B) used in step (1a) was changed to the amount shown in Table 1. The evaluation results are shown in Table 1.

### <Comparative Example 1>

A 1 mm-thick methacrylic resin shaped article was prepared using the same procedures employed in example 1 except that the syrup material used in step (1a) was changed to that shown in Table 1 and that the polymerization initiator used in step (2a) was changed to that shown in Table 1. The evaluation results are shown in Table 1. Since no copolymer (B) was added, the obtained methacrylic resin shaped article exhibited insufficient impact resistance.

### <Comparative Example 2>

A 1 mm-thick methacrylic resin shaped article was prepared using the same procedures employed in example 1 except that the polymerization initiator used in step (2a) was changed to that shown in Table 1. The evaluation results are shown in Table 1. Since the polymerization initiator represented by formula (1) above was not used in any of steps (1a) and (2a), the obtained methacrylic resin shaped article exhibited low durability.

### <Comparative Example 3>

A 1 mm-thick methacrylic resin shaped article was prepared using the same procedures employed in example 1 except that the polymerization initiators used in steps (1a) and (2a) respectively were changed to those shown in Table 1, and that instead of EMA, the same amount of ethylene-vinyl acetate copolymer (EVA) (brand name: Evaflex V523, made by DuPont-Mitsui Polychemicals Co., Ltd.) was used. The evaluation results are shown in Table 1. Since no copolymer (B) was added, an initial haze value was high and transparency was low in the obtained methacrylic resin shaped article.

### <Comparative Example 4>

A 1 mm-thick methacrylic resin shaped article was prepared using the same procedures employed in example 1 except that the polymerization initiator used in step (2a) was changed to that shown in Table 1. The evaluation results are shown in Table 1. Since the polymerization initiator represented by formula (1) above was not used in any of steps (1a) and (2a), the obtained methacrylic resin shaped article exhibited low durability.

### <Comparative Example 5>

A methacrylic resin shaped article was prepared by the same procedures employed in comparative example 4 except that mold (2) was used instead of mold (1) in step (2a). A 13 µm-thick cured layer was laminated on each of both surfaces of the 1 mm-thick methacrylic resin shaped article. The evaluation results are shown in Table 1. Since the polymerization initiator represented by formula (1) above was not used in any of steps (1a) and (2a), the obtained methacrylic resin shaped article exhibited low durability.

### <Example 10>

### (Step 1b)

In a reaction vessel equipped with a cooling tube, thermometer and stirrer, the following was supplied: as the monomer material, 100 parts of methyl methacrylate (MMA) (brand name: Acryester M, made by Mitsubishi Rayon Co., Ltd.); and as copolymer (B), 0.05 parts of ethylene-methyl acrylate copolymer (EMA) (brand name: REXPEARL EMA EB050S, made by Japan Polyethylene Corporation). Heating of the mixture was begun while the mixture was being stirred. The liquid temperature was raised to 80°C and was kept there for 30 minutes to dissolve copolymer (B). Then, a polymer mixture was prepared by adding 0.1 part of a polymerization initiator, that is t-butylperoxy pivalate, where "R" in formula (1) above is a t-butyl group (made by NOF Corporation, 70 mass% pure t-butylperoxy pivalate).

### (Step 2a)

The polymer material was poured into mold (1), and the distance between opposing stainless-steel plates was adjusted to 1.6 mm. Then, the mold (1) was heated for two hours in a water bath of 70°C, and was further heated for 10 minutes in an air oven of 200°C. Accordingly, a sheet-type polymer was obtained.

### (Step 3)

The sheet-type polymer was cooled, and the stainless-steel plates were removed from the sheet-type polymer to obtain a 1 mm-thick methacrylic resin shaped article.
The evaluation results are shown in Table 2.

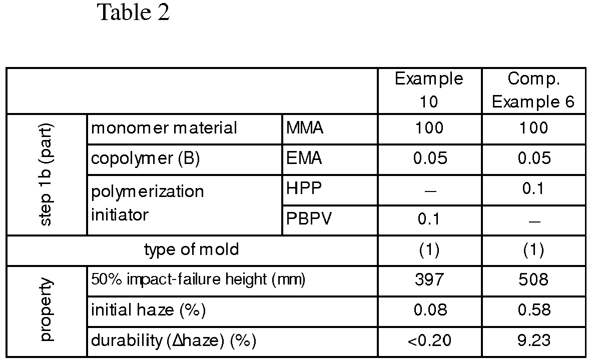

### <Comparative Example 6>

A 1 mm-thick methacrylic resin shaped article was prepared using the same procedures employed in example 10 except that the polymerization initiator used in step (1b) was changed to that shown in Table 2. The evaluation results are shown in Table 1. Since the polymerization initiator represented by formula (1) above was not used, the obtained methacrylic resin shaped article exhibited low durability.

### <Example 11>

### (Step 1a)

In a reaction vessel equipped with a cooling tube, thermometer and stirrer, the following was supplied: as part of the monomer material, 65 parts of methyl methacrylate (MMA) (brand name: Acryester M, made by Mitsubishi Rayon Co., Ltd.), 22.2 parts of isobornyl methacrylate (IBXMA) (brand name: Acrylester IBX, made by Mitsubishi Rayon Co., Ltd.), 8.2 parts of t-butyl methacrylate (TBMA) (brand name: Acrylester TB, made by Mitsubishi Rayon), 3.5 parts of isobornyl acrylate (IBXA) (brand name: Acrylester IB, made by Mitsubishi Rayon), 1.1 parts of n-butyl acrylate (BA) (brand name: Butyl Acrylate, made by Mitsubishi Chemical Corporation), and 0.08 parts of neopentylglycol dimethacrylate (NPG) (brand name: NK Ester NPG, made by Shin-Nakamura Chemical Co., Ltd.); and as copolymer (B), 0.038 parts of ethylene-methyl acrylate copolymer (EMA) (brand name: REXPEARL EMA EB050S, made by Japan Polyethylene Corporation). Heating of the mixture was begun after nitrogen gas bubbling was performed while the mixture was being stirred. When the liquid temperature reached 60°C, 0.03 parts of t-hexylperoxy pivalate (made by NOF Corporation, 70 mass% pure t-hexylperoxy pivalate) was added. Accordingly, a syrup material was prepared. The liquid temperature of the syrup material was further raised to 100°C and was kept there for 13 minutes. After that, the liquid temperature of the syrup material was cooled to room temperature and a syrup was obtained. The polymer content in the syrup was 20 mass%.

### (Step 2a)

To prepare a polymer material, the following were added to 69 parts of the syrup: as the remaining monomer material, 29 parts of MMA and 2 parts of NPG; and as a polymerization initiator, 0.12 parts of t-butylperoxy perpivalate, as represented by formula (1) above where "R" is a t-butyl group (made by NOF Corporation, 70 mass% pure t-butylperoxy pivalate), 0.15 parts of 1,1,3,3-tetramethyl butyl peroxy-2-ethylhexanoate (made by NOF, 90 mass% pure 1,3,3-tetramethyl butyl peroxy-2-ethylhexanoate) and 0.01 part of t-hexylperoxy isopropyl monocarbonate (made by NOF, 90 mass% pure t-hexylperoxy isopropyl monocarbonate); and as an additive, 0.05 parts of dioctyl sulfosuccinate sodium (brand name: AOT, made by CYTEC Industries, Inc.). Next, the polymer material was poured into mold (1), and the distance between opposing stainless-steel plates was adjusted to 1.6 mm. Then, the mold (1) was heated for an hour in a water bath of 80°C, and was further heated for 10 minutes in an air oven at 200°C. Accordingly, a sheet-type polymer was obtained.

### (Step 3)

The sheet-type polymer was cooled, and the stainless-steel plates were removed from the sheet-type polymer to obtain a 1 mm-thick methacrylic resin shaped article. The evaluation results are shown in Table 3.

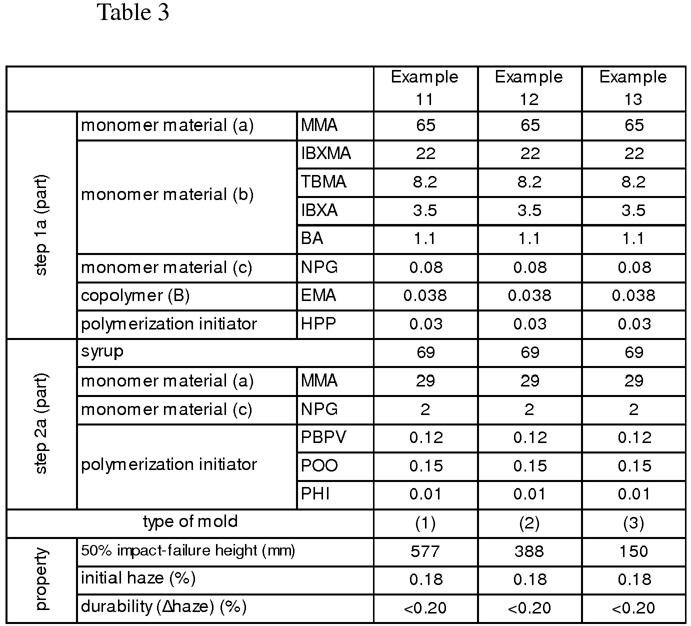

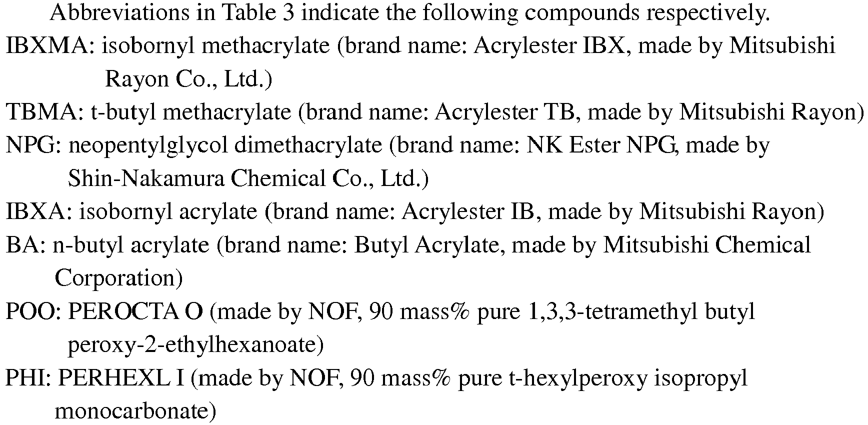

### <Example 12>

A methacrylic resin shaped article was prepared using the same procedures employed in example 11 except that mold (2) was used instead of mold (1) in step (2a). A 13 µm-thick cured layer was laminated on each of both surfaces of the 1 mm-thick methacrylic resin shaped article. The evaluation results are shown in Table 3.

### <Example 13>

A methacrylic resin shaped article was prepared using the same procedures employed in example 11 except that mold (3) was used instead of mold (1) in step (2a). A 26 µm-thick cured layer was laminated on each of both surfaces of the 1 mm-thick methacrylic resin shaped article. The evaluation results are shown in Table 3.

The present application is based upon and claims the benefit of priority to Japanese Patent Application No. 2012-244091, filed Nov. 6, 2012, the entire contents of which are incorporated herein by reference.

So far, the present invention has been described with reference to the embodiments and examples. However, the present invention is not limited to the above embodiments and examples. Various modifications are possible for the structure and detailed descriptions of the present invention within a scope easily understood by a person skilled in the art.

## Claims

1. A production method of a (meth)acrylic resin composition configured to contain a (meth)acrylic polymer (A) having a methyl methacrylate unit and an olefin-alkyl (meth)acrylate copolymer (B),
wherein the (meth)acrylic polymer (A) is produced by polymerizing a monomer material containing methyl methacrylate in the presence of an olefin-alkyl (meth)acrylate copolymer (B) using a polymerization initiator represented by formula (1) below.
(CH₃)₃C-O-O-CO-R (1)
(in formula (1), "R" is a hydrocarbon group having 1∼20 carbon atoms or an alkoxy group having 1∼20 carbon atoms)

2. The production method of a (meth)acrylic resin composition according to Claim 1, wherein the (meth)acrylic polymer (A) with a methyl methacrylate unit is produced by bulk polymerization of a monomer material containing methyl methacrylate in the presence of the olefin-alkyl (meth)acrylate copolymer (B) using the polymerization initiator represented by formula (1).

3. The production method of a (meth)acrylic resin composition according to Claim 1 or 2, wherein the (meth)acrylic polymer (A) is configured to have a methyl methacrylate (a) unit, a (meth)acrylate (b) unit, which contains a hydrocarbon group having 1∼11 carbon atoms but is not the methyl methacrylate (a), a monomer (c) unit having at least two ethylenically unsaturated bonds in the molecule, and a vinyl monomer (d) unit which is not any of monomers (a)∼(c).

4. A production method of a (meth)acrylic resin shaped article configured to contain a (meth)acrylic polymer (A) having a methyl methacrylate unit and an olefin-alkyl (meth)acrylate copolymer (B), comprising steps (1a), (2a) and 3:
step 1a: a step for obtaining a syrup by polymerizing at least part of a monomer material containing methyl methacrylate;
step 2a: a step for obtaining a (meth)acrylic resin shaped article by pouring into a mold the syrup and, if necessary, the remaining monomer material containing methyl methacrylate, and by conducting polymerization; and
step 3: a step for taking out a (meth)acrylic resin shaped article from the mold,
wherein polymerization is conducted in the presence of an olefin-alkyl (meth)acrylate copolymer (B) in at least one of steps (1a) and (2a), and
polymerization is conducted using the polymerization initiator represented by formula (1) in at least one of steps (1a) and (2a).
(CH₃)₃C-O-O-CO-R (1)
(in formula (1), "R" is a hydrocarbon group having 1∼20 carbon atoms or an alkoxy group having 1∼20 carbon atoms)

5. A production method of a (meth)acrylic resin shaped article configured to contain a (meth)acrylic polymer (A) having a methyl methacrylate unit and an olefin-alkyl (meth)acrylate copolymer (B), comprising steps (1b), (2b) and 3:
step 1b: a step for preparing a polymer mixture that contains a monomer material having methyl methacrylate, an olefin-alkyl (meth)acrylate copolymer (B) and a polymerization initiator represented by formula (1) below;
step 2b: a step for obtaining a (meth)acrylic resin shaped article by pouring the polymer mixture into a mold, and by polymerizing the mixture; and
step 3: a step for taking out a (meth)acrylic resin shaped article from the mold.
(CH₃)₃C-O-O-CO-R (1)
(in formula (1), "R" is a hydrocarbon group having 1∼20 carbon atoms or an alkoxy group having 1∼20 carbon atoms)

6. The production method of a (meth)acrylic resin shaped article according to Claim 4 or 5, wherein the (meth)acrylic polymer (A) is configured to have a methyl methacrylate (a) unit, a (meth)acrylate (b) unit which contains a hydrocarbon group having 1∼11 carbon atoms but is not methyl methacrylate (a), a monomer (c) unit having at least 2 ethylenically unsaturated bonds in the molecule, and a vinyl monomer (d) unit which is not any of (a) through (c).

7. A (meth)acrylic resin shaped article, wherein
a thickness is 2 mm or less;
a 50% impact-failure height based on ISO 6603-1 is 100 mm or greater; and
a change in haze values is 1% or less before and after thermal cycle testing under the conditions below.
<thermal cycle testing method>
• size of test piece: 10 mm×10 mm square
• temperature inside chamber: 85±0.5°C in high-temperature chamber, -40±0.5°C in low-temperature chamber,
• holding duration in chamber: 30 minutes in high-temperature chamber, 30 minutes in low-temperature chamber,
• time spent for transferring between high-temperature chamber and low-temperature chamber: 10 seconds or less
• number of test cycles: 72

8. The (meth)acrylic resin shaped article according to Claim 7, wherein the (meth)acrylic polymer (A) is configured to have a methyl methacrylate (a) unit, a (meth)acrylate (b) unit which has a hydrocarbon group having 1∼11 carbon atoms but is not methyl methacrylate (a), a monomer (c) unit having at least 2 ethylenically unsaturated bonds in the molecule, and a vinyl monomer (d) unit which is not any of (a) through (c).

9. A front-surface plate of a liquid-crystal display produced using the shaped article made of the (meth)acrylic resin composition obtained by the method according to Claim 1 or 2.

10. A touch panel produced using the shaped article made of the (meth)acrylic resin composition obtained by the method according to Claim 1 or 2.

11. A front-surface plate of a liquid-crystal display produced using the (meth)acrylic resin shaped article according to Claim 7 or 8.

12. A touch panel produced using the (meth)acrylic resin shaped article according to Claim 7 or 8.
